# EUROPÄISCHE PATENTSCHRIFT

(11) **EP 3 042 809 B1**
(45) Veröffentlichungstag und Bekanntmachung des Hinweises auf die Patenterteilung: **26.02.2020**
(21) Anmeldenummer: 15194200.0
(22) Anmeldetag: 12.11.2015
(51) Int. Cl.: B60R 25/06, B62H 5/08, F16H 61/16

(54) **AUTOMATIKSCHALTUNG MIT DIEBSTAHLSCHUTZ SOWIE STEUERUNGSVERFAHREN**
AUTOMATIC CIRCUIT WITH ANTI-THEFT FUNCTION AND CONTROL METHOD
CIRCUIT AUTOMATIQUE COMPRENANT UNE PROTECTION ANTI-VOL ET PROCÉDÉ DE COMMANDE

(30) Priorität: 09.01.2015 DE 102015200178
(43) Veröffentlichungstag der Anmeldung: 13.07.2016
(73) Patentinhaber: ROBERT BOSCH GMBH, 70442 Stuttgart (DE)
(72) Erfinder: Mattes, Thomas, 78598 Koenigsheim (DE); Dasbach, Gregor, 72074 Tuebingen (DE); Greiner, Rinaldo, 72762 Reutlingen (DE)

(56) Entgegenhaltungen:
- FR-A1- 3 003 537
- GB-A- 2 325 447
- JP-A- 2004 322 875
- US-A- 5 900 705
- US-A1- 2014 257 650

## Beschreibung

Die Erfindung betrifft ein Verfahren zur Steuerung einer Automatikgangschaltung eines Fahrzeugs, ein hierfür geeignetes Steuergerät sowie ein Fahrzeug, insbesondere ein Zweirad, welches ein derartiges Steuergerät aufweist.

### Stand der Technik

Es sind bereits Wegfahrsperren für Fahrzeuge bekannt, insbesondere für elektromotorisch betriebene Zweiräder (z.B. Elektrofahrräder oder Elektro-Scooter), bei denen mittels externer Sperrmechanismen das Fahrzeug durch eine mechanische Verbindung an feststehenden Gegenstände oder durch mechanische Sperrung von Radkomponenten gesichert wird. Da die mechanischen Sperrelemente jedoch von außen zugänglich sind, besteht kein Schutz vor Manipulation.

Weiterhin sind für Elektrofahrräder Mechanismen bekannt, mit denen der elektrische Antrieb bewusst gesperrt werden kann. Trotz der Sperrung kann das Elektrofahrrad bewegt werden oder sogar einfach ohne elektrischen Antrieb benutzt werden. Es sind auch Verfahren bekannt, in welchen mittels des Elektromotors ein Gegendrehmoment erzeugt wird, um so einen Wegfahrschutz zu realisieren.

Die Sperrmechanismen sind daher nicht geeignet, das Fahrrad vollständig zu schützen. Es verbleibt immer eine Möglichkeit, entweder die zugänglichen Sperrmechanismen zu manipulieren oder zumindest das Fahrrad an einen Ort zu verbringen, an dem die Sperre durch Manipulation aufgehoben wird, ohne den Wert oder die Funktion des Fahrrads zu beeinträchtigen.

Dokument US 5 900 705 A offenbart den Oberbegriff des Verfahrensanspruchs 1 und den entsprechenden Vorrichtungsanspruch 7.

Es ist daher eine Aufgabe der Erfindung, die Entwendung eines Fahrzeugs, insbesondere eines zweirädrigen Fahrzeugs wie einem Fahrrad, mittels eines Eingriffs in den Schaltvorgang besser vor Diebstahl zu schützen bzw. die Nutzung des gestohlenen Fahrzeugs für den Dieb zu erschweren.

### Offenbarung der Erfindung

Mit der vorliegenden Erfindung wird ein Verfahren zur Steuerung einer Automatikgangschaltung eines Fahrzeugs, ein Steuergerät, in dem ein derartiges Verfahren abläuft sowie ein Fahrzeug mit einem solchen Steuergerät beansprucht. Dabei ist vorgesehen, dass zur Steuerung der Automatikschaltung ein effizienter Modus vorgesehen ist, bei dem in Abhängigkeit der Umfeld- und/oder Betriebsparameter die Gangschaltung bzw. die Übersetzung der Gangschaltung derart gewählt wird, dass ein im Wesentlicher energieoptimaler Vortrieb des Fahrzeugs ermöglicht wird. Dabei ist es unerheblich, ob die für den Vortrieb aufgewendete Energie von einem Motor und/oder einer mechanisch aufgebrachten Kraft wie beispielsweise der Trittkraft eines Radfahrers stammt. Der Kern der Erfindung besteht dabei darin, dass die Steuerung der Gangschaltung in Abhängigkeit von einem Sicherungssignal, welches die Sicherung des Fahrzeugs gegen eine unbefugte Bewegung bzw. einen Diebstahl repräsentiert, den weiteren Betrieb der Gangschaltung statt in dem effizienten Modus in einem ineffizienten Modus weiterführt. Dabei ist auch vorgesehen, dass im ineffizienten Modus eine zufällige Ansteuerung der Übersetzungen der Gangschaltung erfolgt, unabhängig von der Umgebungs- und/oder Betriebsparameter des Fahrzeugs.

Der Vorteil der Erfindung besteht dabei darin, dass die Nutzung des Fahrzeugs bei der Verwendung einer Automatikgangschaltung für einen potentiellen Dieb erschwert oder sogar unmöglich gemacht wird. Somit kann der Dieb durch die Erzeugung eines unangenehmen und nicht vorhersehbaren Schaltverhaltens der Automatikgangschaltung von einem Entwenden des Fahrzeugs abgehalten bzw. abgeschreckt werden. Besonders vorteilhaft ist die Einstellung eines ineffizienten Modus, wenn der Fahrer in diesem Modus keine Möglichkeit erhält, den automatisch eingestellten Gang bzw. die eingestellte Übersetzung zu verändern.

Weiterhin kann vorgesehen sein, dass gerade die Umgebungs- und/oder Betriebsparameter herangezogen werden, um den ineffizienten Betrieb noch störender zu gestalten, z.B. indem gerade die Übersetzungen eingestellt werden, die für den Vortrieb ungeeignet sind. So kann beispielsweise bei einer erkannten Bergauffahrt die Gangschaltung in einen hohen Gang bzw. einer hohen Übersetzung geschalten werden, während bei einer Bergabfahrt ein niedriger Gang eingestellt wird. Daneben ist jedoch auch möglich, dass beispielsweise bei einem Fahrrad die Trittfrequenz oder das Drehmoment des Radfahrers erkannt wird und daraufhin bei einer hohen Trittfrequenz und/oder einem niedrigen Drehmoment ein niedriger Gang eingelegt wird. Umgekehrt kann auch bei einer geringen Trittfrequenz und/oder einem hohen Drehmoment ein hoher Gang eingelegt werden. Diese Maßnahmen bewirken ein erschwertes Fahren, so dass der potentielle Dieb keinen Fahrspaß empfindet oder nur eingeschränkt vorwärts kommt.

Generell kann auch vorgesehen sein, dass die Gangschaltung während des Betriebs im ineffizienten Modus in den Leerlauf geschalten wird, so dass weder ein elektro-/mechanischer Antrieb noch ein manueller Antrieb, z.B. bei einem Fahrrad, eine Wirkung entfalten kann.

In einer weiteren Ausgestaltung der Erfindung können im ineffizienten Modus gerade solche Übersetzungen eingestellt werden, die einen erhöhten Verschleiß der involvierten Komponenten erzeugen. So kann beispielsweise bei einer Fahrradgangschaltung bewusst ein Schaltzustand eingestellt werden, bei dem der Versatz zwischen dem Kettenblatt und dem Kettenkranz maximal ist. Dies führt dazu, dass die Kette bzw. der Riemen zeitnah verschleißt und die Automatikschaltung nach kurzer Zeit nicht mehr funktioniert.

Alternativ kann auch die Beladung des Energiespeichers eines elektrisch angetriebenen Fahrzeugs, z.B. eines Elektrofahrrads, erfasst werden, um in Abhängigkeit davon durch eine Einstellung einer entsprechenden Übersetzung einen größtmöglichen Energieaufwand durch den Motor zu erzeugen. Durch diese Maßnahme würde sich der Energiespeicher schnell leeren.

Optional kann bei den vorstehenden Ausführungen der Erfindung auch vorgesehen sein, dass die Gangschaltung im ineffizienten Modus in regelmäßigen oder unregelmäßigen Zeitabständen erneut angesteuert wird, um eine andere Übersetzung einzustellen. Dies hat den Vorteil, dass der Nutzer des entwendeten Fahrzeugs kein durchgängiges und vorhersehbares Fahrerverhalten erlebt.

Sowohl zur Ableitung der Steuerung der Gangschaltung im effizienten als auch ineffizienten Modus können verschiedene Umgebungs- und/oder Betriebsparameter erfasst werden, die für die Steuerung des Antriebs bzw. Vortriebs des Fahrzeugs relevant sein können. Für diesen Zweck kann zur Steuerung ein elektro-/mechanisch oder manuell erzeugtes Drehmoment, eine Trittfrequenz an einer Tretkurbel, eine Beschleunigung oder eine Geschwindigkeit des Fahrzeugs oder eines Teils des Fahrzeugs, eine Neigung des Fahrbahnuntergrunds oder des Fahrzeugs, eine Höhenangabe, eine Gierrate, eine elektrische Leistung bzw. eine Leistungsanzeige, z.B. des Energiespeichers eines elektrisch angetriebenen Fahrzeugs, eine Motorleistung, eine GPS-Information und/oder eine Temperatur erfasst und berücksichtigt werden.

Die vorliegende Erfindung kann sowohl bei einem Kraftfahrzeug als auch bei Zweirädern wie Motorrädern und Fahrrädern eingesetzt werden, insbesondere bei elektrisch angetriebenen Fahrrädern.

Weitere Vorteile ergeben sich aus der nachfolgenden Beschreibung von Ausführungsbeispielen bzw. aus den abhängigen Patentansprüchen.

### Kurze Beschreibung der Zeichnungen

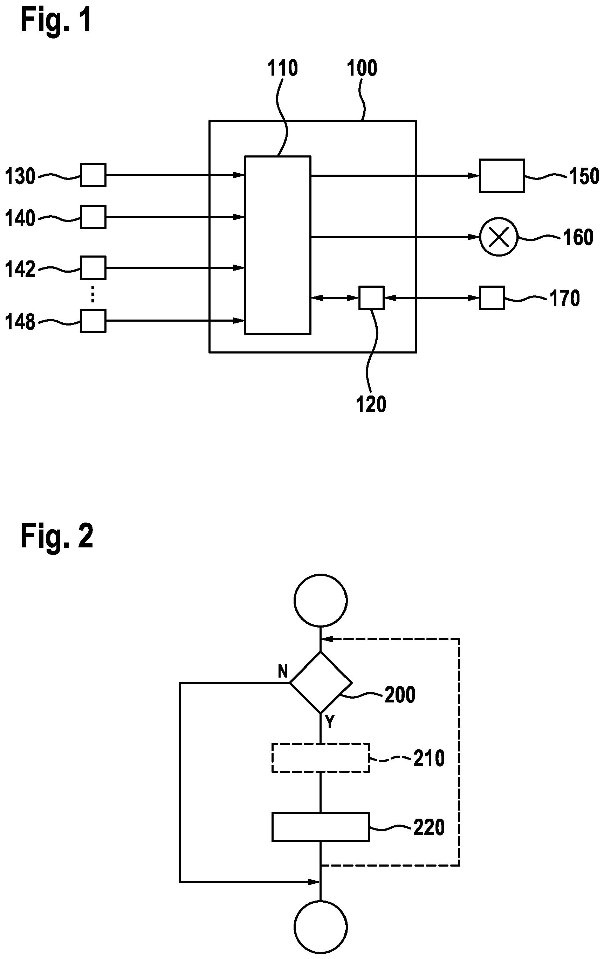

In der Figur 1 ist schematisch das erfindungsgemäße Steuergerät zur Ansteuerung einer Gangschaltung eines Fahrzeugs abgebildet, welches aufgrund von Umfeld- und/oder Betriebsparametern automatisch die Übersetzung der Gangschaltung steuert. Entsprechend ist in Figur 2 ein erfindungsgemäßes Verfahren dargestellt, welches die Steuerung einer Gangschaltung eines Fahrzeugs bei der Vorlage einer Diebstahlsicherung zeigt.

### Offenbarung der Erfindung

In den folgenden Ausführungsbeispielen wird die Erfindung an einigen Beispielen der Anwendung bei einem elektrisch betriebenen Fahrrad beschrieben. Darüber hinaus kann die Erfindung jedoch bei jedem Fahrzeug verwendet werden, bei dem eine Steuerung einer (Automatik-)Gangschaltung mittels eines Steuergeräts erfolgt.

Anhand der Figur 1 wird ein mögliches Ausführungsbeispiel der Erfindung gezeigt. In einem Steuergerät 100 ist eine Steuereinheit 110 vorgesehen, welche die Schaltzustände, d.h. die einzelnen Übersetzungen einer Gangschaltung 150 eines Fahrzeugs automatisch steuert. Zur Ableitung der geeigneten Übersetzungen erfasst die Steuereinheit 110 wenigstens einen Umgebungs- bzw. Betriebsparameter des Fahrzeugs. Aus diesem Umgebungs- bzw. Betriebsparameter wird eine effiziente Umsetzung der vorhandenen Antriebsleistung auf den Vortrieb bzw. die Fortbewegung des Fahrzeugs abgeleitet, woraus sich die Einstellung der Gangschaltung über die Wahl der entsprechenden Übersetzung bzw. des einzustellenden Gangs ergibt. Die entsprechende Wahl der Übersetzung kann zusätzlich auf einem Display 160 angezeigt werden.

Als mögliche Umgebungs- und Betriebsparameter sind dabei die Sensorgrößen von einem oder mehrerer entsprechender Sensoren 140, 142 ... 148 (die Erfindung ist nicht auf den Einsatz von fünf Sensoren beschränkt) vorgesehen. Hierbei kann es sich beispielsweise um die Beschleunigung und/oder Geschwindigkeit des Fahrzeugs oder eines Teils davon handeln, z.B. die Trittgeschwindigkeit der Tretkurbel eines Fahrrads. Um die potentiell zur Verfügung stehende Kraft für den Vortrieb des Fahrzeugs zu erfassen, kann das Drehmoment eines motorgetriebenen Antriebs oder einer manuell betätigten Tretkurbel erfasst und berücksichtigt werden. Eine vergleichbare Information liefert auch die Motorleistung sowie die Restenergie in einem mitgeführten Energiespeicher. Bei einem Elektrofahrrad wäre hier beispielsweise die Ladeinformation des Akkumulators zu berücksichtigen. Darüber hinaus können aber auch Drehzahlinformationen des Motors und/oder der Tretkurbel, die Neigung des Fahrbahnuntergrunds, eine Höhenangabe, eine GPS-Information und/oder eine Temperatur herangezogen werden, um geeignete Schaltzeitpunkte und Schaltzustände abzuleiten. Optional kann auch eine Verschleißangabe der verwendeten Komponenten der Gangschaltung herangezogen werden.

Beim Abstellen des Fahrzeugs mit der erfindungsgemäßen Steuerung der Automatikgangschaltung kann der Fahrer eine Diebstahlsicherung in Form eines Sicherungssignal im Steuergerät hinterlegen. Dieses Sicherungssignal zeigt dem System an, dass eine weitere Bewegung des Fahrzeugs vom Fahrer nicht gewünscht ist. Erst bei der Aufhebung dieses Sicherungssignals durch den Fahrer soll das Fahrzeug wieder in seiner normalen Funktion zur Verfügung stehen.

Zur Erzeugung des Sicherungssignals stehen mehrere Möglichkeiten zur Verfügung. Der Fahrer kann an einem Bedienelement, welches entweder direkt an dem Steuergerät 100 angebracht ist oder mittels einer elektrischer Leitung oder per Funk (z.B. mittels einer App auf einem Smartphone) mit diesem verbunden ist, diese Information eingeben. Alternativ kann auch das Abziehen einer Bedieneinheit 130, zum Beispiel dem HMI (Human Machine Interface - Mensch Maschine Schnittstelle, Steuergerät für den Elektromotor) eines Elektrofahrrads, dem Steuergerät, welches sich weiterhin am Fahrzeug befindet, automatisch anzeigen, dass eine Sicherung des Fahrzeugs gewünscht ist. Dies kann beispielsweise auch dadurch erfolgen, dass das Steuergerät 100 das Vorhandensein der Bedieneinheit 130 abfragt. In einer weiteren Ausgestaltung kann auch vorgesehen sein, dass bestimmte Verhaltensmuster des Fahrzeugs oder Identifikationsmerkmale des Fahrers in einem internen Speicher 120 abgelegt sind, die von der Steuereinheit 110 zu Betriebsbeginn oder während des Betriebs überprüft werden. Sollte hier keine Übereinstimmung erkannt werden, so kann das Sicherungssignal erzeugt werden. Diese Verhaltensmuster bzw. Identifikationsmerkmale können durch den Fahrer mittels der Steuereinheit 110 programmiert werden oder durch einen externen Anschluss 170 in den Speicher 120 eingebracht bzw. ausgelesen werden.

Wird anhand des vorliegenden Sicherungssignals erkannt, dass das Fahrzeug gegen eine unbefugte Bewegung gesichert ist, kann neben der Ansteuerung der Gangschaltung 150 in einem ineffizienten Modus auch eine Mitteilung an das mit dem Steuergerät 100 verbundene Bedienelement 160 oder einer beim Fahrer befindlichen Bedieneinheit 130 gesendet werden. So kann der potentielle Dieb darüber informiert werden, dass eine Nutzung des entwendeten Fahrzeugs nicht sinnvoll ist.

In dem Ablaufdiagram der Figur 2 werden die wesentlichen Schritte der erfindungsgemäßen Steuerung der Automatikgangschaltung beschrieben. Nach dem Start des dem Verfahren zugrunde liegenden Algorithmus' wird in einem ersten Schritt 200 überprüft, ob ein Sicherungssignal vorliegt. Liegt kein Sicherungssignal vor, d.h. wurde vom Fahrer kein Diebstahlschutz aktiviert oder vom System kein Diebstahlschutz erkannt, wird das Verfahren entweder beendet oder mittels der normalen Ansteuerung zur Ermittlung der effizienten Übersetzung im effizienten Modus weiterverfolgt. Alternativ kann auch vorgesehen sein, dass das Verfahren erst beim Vorliegen eines Sicherungssignals in Gang gesetzt wird, um den ineffizienten Modus zu starten.

Im nachfolgenden optionalen zweiten Schritt 210 kann wenigstens ein Umgebungs- und/oder Betriebsparameter erfasst werden, der für die Ermittlung der effizienten Übersetzung verwendet wird oder die insbesondere unbefugte Bewegung des Fahrzeugs repräsentiert.

Der nachfolgende Schritt 220 steuert nach erkanntem Sicherungssignal die Gangschaltung derart an, dass sie in einem ineffizienten Modus arbeitet. Optional kann gleichzeitig verhindert werden, dass der Fahrer des Fahrzeugs einen anderen Gang wählt bzw. eine andere Übersetzung einstellt. Der ineffiziente Modus kann dabei auf mehrere Arten umgesetzt werden.

Eine Möglichkeit, die Gangschaltung im effizienten Modus zu betreiben besteht darin, die Übersetzung der Gangschaltung zufällig und unvorhersehbar auszuwählen, unabhängig von den aktuellen Umgebungs- und/oder Betriebsparametern. Diese so gewählte zufällige Einstellung kann beispielsweise auch in regelmäßigen oder unregelmäßigen Zeitabständen verändert werden.

Alternativ kann bewusst auf die erfassten Umgebungs- und/oder Betriebsparameter zurückgegriffen werden, um die Ineffizienz der Automatikgangschaltung noch zu steigern. So kann bewusst ein Gang bzw. eine Übersetzung eingestellt werden, die für den Vortrieb und somit die Fortbewegung des Fahrzeugs ungeeignet ist oder der bei ansonsten gleichbleibenden Antriebsbedingungen wie Motorleistung oder Trittleistung einen geringeren Vortrieb als bei der effiziente Modus liefert. Neben der Schaltung in den Leerlauf kann somit auch bei erkannter Bergauffahrt auf einen hohen Gang geschalten werden, um z.B. einem Fahrradfahrer das Treten der Tretkurbel zu erschweren. Eine weitere Möglichkeit besteht darin, das Drehmoment des Fahrradfahrers zu erfassen und beispielsweise bei geringem Drehmoment einen niedrigen Gang einzustellen. Insgesamt kann durch dieses Vorgehen der Vortrieb bzw. das Fortkommen des Fahrzeugs erheblich reduziert werden.

Bei der Verwendung eines motorgetriebenen Fahrzeugs, wie beispielsweise einem Elektrofahrrad, kann die ineffiziente Steuerung der Automatikgangschaltung auch in Abhängigkeit von der Antriebsleistung des Motors sowie der vorhandenen Energiereserven durchgeführt werden. So ist beispielsweise denkbar, dass gezielt ein Gang bzw. eine Übersetzung eingestellt wird, die den höchsten Kraftaufwand bzw. Energieaufwand des Motors benötigt. Durch eine derartige Beschaltung reduziert sich die Reichweite des Fahrzeugs, indem der Energiespeicher schneller entladen wird.

Weiterhin ist möglich, die Gänge im ineffizienten Modus derart anzusteuern, dass die verwendeten Komponenten wie Kette, Riemen, Kettenblatt oder Kettenkranz einem erhöhten Verschleiß ausgesetzt sind. So kann beispielsweise bei einem Fahrrad ein maximaler Versatz der Kette zwischen den Kettenblättern und dem Kettenkranz eingestellt werden.

Nach der Ansteuerung der Gangschaltung und der Initiierung des ineffizienten Modus kann das Verfahren beendet werden oder optional erneut mit der Abfrage des Vorliegens des Sicherungssignals im Schritt 200 weiterverfolgt werden.

Durch diese erneute Abfrage wird dem Fahrer die Möglichkeit gegeben, das Sicherungssignal zurückzusetzen und die Automatikgangschaltung wieder im Normalbetrieb, d.h. im effizienten Modus zu betreiben.

## Patentansprüche

1. Verfahren zur Steuerung einer Automatikgangschaltung eines Fahrzeugs, insbesondere eines Zweirads, wobei vorgesehen ist, dass die Übersetzung der Gangschaltung (150) des Fahrzeugs in Abhängigkeit von wenigstens einem Umgebungs- und/oder Betriebsparametern des Fahrzeugs automatisch in einem für den Vortrieb effizienten Modus betrieben wird, wobei das Vorliegen eines Sicherungssignal erfasst wird (200), welches eine Sicherung des Fahrzeugs gegen eine unbefugte Bewegung repräsentiert, wobei die Gangschaltung (150) in Abhängigkeit des Vorliegens des Sicherungssignals in einem ineffizienten Modus betrieben wird,
**dadurch gekennzeichnet, dass**
der ineffiziente Modus in Form einer zufälligen Ansteuerung einer Übersetzung der Gangschaltung (150) unabhängig von den Umgebungs- und/oder Betriebsparametern des Fahrzeugs erreicht wird.

2. Verfahren nach Anspruch 1, **dadurch gekennzeichnet, dass** die Ansteuerung der Gangschaltung (150) bzw. die Wahl der Übersetzung im ineffizienten Modus in Abhängigkeit von den Umgebungs- und/oder Betriebsparametern erfolgt, wobei gegenüber dem effizienten Modus eine Übersetzung gewählt wird, die für den Vortrieb ungeeignet ist, wobei insbesondere vorgesehen ist, dass eine Übersetzung gewählt wird, die einen geringen Vortrieb erzeugt.

3. Verfahren nach Anspruch 2, **dadurch gekennzeichnet, dass** der ineffiziente Modus in Abhängigkeit von der Steigung der Fahrbahn angesteuert wird, insbesondere bei einer Bergauffahrt.

4. Verfahren nach einem der vorhergehenden Ansprüche, **dadurch gekennzeichnet, dass** die Gangschaltung (150) im ineffizienten Modus mit einer Übersetzung betrieben wird, die einen hohen Verschleiß der mit dem Antrieb verbundenen Komponenten erreicht.

5. Verfahren nach einem der vorhergehenden Ansprüche, **dadurch gekennzeichnet, dass** die Ansteuerung der Gangschaltung (150) bzw. die Wahl der Übersetzung im ineffizienten Modus in regelmäßigen oder unregelmäßigen Zeitabständen erneut durchgeführt wird.

6. Verfahren nach einem der vorhergehenden Ansprüche, **dadurch gekennzeichnet, dass** als Umgebungs- und/oder Betriebsparameter ein Drehmoment, eine Trittfrequenz, eine Beschleunigung, eine Neigung, eine Höhenangabe, eine Geschwindigkeit, eine Drehzahl, eine Gierrate, eine elektrische Leistung, eine Motorleistung, eine GPS-Information und/oder eine Temperatur verwendet wird.

7. Steuergerät (100) für eine Automatikgangschaltung eines Fahrzeugs, insbesondere eines Zweirads, mit
• einem Steuergerät (100), welches eines der Verfahren nach Anspruch 1 bis 8 ausführt und wenigstens einen Umgebungs- und/oder Betriebsparameter des Fahrzeugs erfasst, und
• einer durch das Steuergerät (100) steuerbaren Gangschaltung (150), wobei die Übersetzung der Gangschaltung (150) automatisch in Abhängigkeit von dem wenigstens einen Umgebungs- und/oder Betriebsparameter des Fahrzeugs in einen Schaltzustand geschalten wird, der einen Vortrieb des Fahrzeugs in einem effizienten Modus ermöglicht,
wobei das Steuergerät (100) in Abhängigkeit der Erfassung eines Sicherungssignals (200), welches eine Sicherung des Fahrzeugs gegen eine unbefugte Bewegung repräsentiert, die Gangschaltung (150) in einen ineffizienten Modus schaltet,
**dadurch gekennzeichnet, dass**
das Steuergerät (100) die Übersetzung der Gangschaltung (150) im ineffizienten Modus zufällig schaltet, unabhängig von den Umgebungs- und/oder Betriebsparameter des Fahrzeugs.

8. Steuergerät (100) nach Anspruch 7, **dadurch gekennzeichnet, dass** das Steuergerät (100) die Gangschaltung (150) bzw. die Übersetzung im ineffizienten Modus in Abhängigkeit von den Umgebungs- und/oder Betriebsparametern ansteuert, wobei gegenüber dem effizienten Modus eine Übersetzung gewählt wird, die für den Vortrieb ungeeignet ist, wobei insbesondere vorgesehen ist, dass eine Übersetzung gewählt wird, die einen geringen Vortrieb erzeugt.

9. Steuergerät (100) nach einem der Ansprüche 7 oder 8, **dadurch gekennzeichnet, dass** das Steuergerät (150) die Gangschaltung (100) im ineffizienten Modus in regelmäßigen oder unregelmäßigen Zeitabständen derart ansteuert, dass die eingestellte Übersetzung geändert wird.

10. Steuergerät (100) nach einem der Ansprüche 7 bis 9, **dadurch gekennzeichnet, dass** das Steuergerät (100) als Umgebungs- und/oder Betriebsparameter eine Drehmomentengröße, eine Trittfrequenzgröße, eine Beschleunigungsgröße, eine Neigungsgröße, eine Höhenangabe, eine Geschwindigkeitsgröße, eine Drehzahlgröße, eine Gierratengröße, eine elektrische Leistungsgröße, eine Motorleistungsgröße, eine GPS-Information und/oder eine Temperaturgröße erfasst.

11. Fahrzeug, insbesondere ein elektrisch angetriebenes Zweirad, mit einem Steuergerät (100) für eine Automatikgangschaltung eines Fahrzeugs nach einem der Ansprüche 7 bis 9 und/oder einem Steuergerät (100), welches eines der Verfahren nach Anspruch 1 bis 6 ausführt, mit
• einem Steuergerät (100), welches wenigstens einen Umgebungs- und/oder Betriebsparameter des Fahrzeugs erfasst, und
• einer durch das Steuergerät (100) steuerbaren Gangschaltung (150), wobei die Übersetzung der Gangschaltung (150) automatisch in Abhängigkeit von dem wenigstens einen Umgebungs- und/oder Betriebsparameter des Fahrzeugs in einen Schaltzustand geschalten wird, der einen Vortrieb des Fahrzeugs in einem effizienten Modus ermöglicht,
**dadurch gekennzeichnet, dass**
das Steuergerät (100) in Abhängigkeit eines Sicherungssignals, welches eine Sicherung des Fahrzeugs gegen eine unbefugte Bewegung repräsentiert, die Gangschaltung (150) in einem ineffizienten Modus schaltet.

## Claims

1. Method for controlling an automatic gearshift of a vehicle, in particular of a two-wheeled vehicle, wherein it is provided that the transmission ratio of the gearshift (150) of the vehicle is operated automatically in a mode which is efficient for propulsion, in accordance with at least one ambient parameter and/or operating parameter of the vehicle, wherein the presence of a security signal, which represents securing of the vehicle against unauthorized movement, is sensed (200), wherein the gearshift (150) is operated in an inefficient mode in accordance with the presence of the security signal
**characterized in that**
the inefficient mode is brought about in the form of random actuation of a transmission ratio of the gearshift (150) independently of the ambient parameters and/or operating parameters of the vehicle.

2. Method according to Claim 1, **characterized in that** the actuation of the gearshift (150) and/or the selection of the transmission ratio occur/occurs in the inefficient mode in accordance with the ambient parameters and/or operating parameters, wherein in contrast with the efficient mode a transmission ratio is selected which is unsuitable for propulsion, wherein, in particular, there is provision that a transmission ratio is selected which produces little propulsion.

3. Method according to Claim 2, **characterized in that** the inefficient mode is actuated in accordance with the gradient of the carriageway, in particular in the case of uphill travel.

4. Method according to one of the preceding claims, **characterized in that** in the inefficient mode the gearshift (150) is operated with a transmission ratio which brings about a high level of wear of the components which are connected to the drive.

5. Method according to one of the preceding claims, **characterized in that** in the inefficient mode the actuation of the gearshift (150) and/or the selection of the transmission ratio are/is repeated at regular or irregular time intervals.

6. Method according to one of the preceding claims, **characterized in that** a torque, a pedalling frequency, an acceleration, an inclination, an altitude information item, a speed, a rotational speed, a yaw rate, an electrical power level, a motor power level, a GPS information item and/or a temperature are/is used as the ambient parameter and/or operating parameter.

7. Control unit (100) for an automatic gearshift of a vehicle, in particular of a two-wheeled vehicle, having
• a control unit (100) which executes one of the methods according to Claims 1 to 8 and senses at least one ambient parameter and/or operating parameter of the vehicle, and
• a gearshift (150) which can be controlled by the control unit (100), wherein the transmission ratio of the gearshift (150) is shifted automatically, in accordance with the at least one ambient parameter and/or operating parameter of the vehicle, into a shifted state which permits propulsion of the vehicle in an efficient mode,
wherein the control unit (100) shifts the gearshift (150) into an inefficient mode in accordance with the sensing of a security signal (200), which represents securing of the vehicle against unauthorized movement,
**characterized in that**
in the inefficient mode the control unit (100) randomly shifts the transmission ratio of the gearshift (150) independently of the ambient parameters and/or operating parameters of the vehicle.

8. Control unit (100) according to Claim 7, **characterized in that** in the inefficient mode the control unit (100) actuates the gearshift (150) and/or the transmission ratio in accordance with the ambient parameters and/or operating parameters, wherein in contrast with the efficient mode a transmission ratio is selected which is unsuitable for propulsion, wherein, in particular, there is provision that a transmission ratio is selected which generates little propulsion.

9. Control unit (100) according to one of Claims 7 and 8, **characterized in that** in the inefficient mode the control unit (150) actuates the gearshift (100) at regular or irregular time intervals in such a way that the transmission ratio which is set is changed.

10. Control unit (100) according to one of Claims 7 to 9, **characterized in that** the control unit (100) senses, as an ambient and/or operating parameter, a torque variable, a pedalling frequency variable, an acceleration variable, an inclination variable, a height information item, a speed variable, a rotational speed variable, a yaw rate variable, an electrical power variable, a motor power variable, a GPS information item and/or a temperature variable.

11. Vehicle, in particular an electrically driven two-wheeled vehicle, having a control unit (100) for an automatic gearshift of a vehicle according to one of Claims 7 to 9 and/or a control unit (100) which executes one of the methods according to Claims 1 to 6, having
• a control unit (100) which senses at least one ambient parameter and/or operating parameter of the vehicle, and
• a gearshift (150) which can be controlled by the control unit (100), wherein the transmission ratio of the gearshift (150) is shifted automatically, in accordance with the at least one ambient parameter and/or operating parameter of the vehicle, into a shifted state which permits propulsion of the vehicle in an efficient mode,
**characterized in that**
the control unit (100) shifts the gearshift (150) in an inefficient mode in accordance with a security signal which represents securing of the vehicle against unauthorized movement.

## Revendications

1. Procédé de commande d'un changement de vitesse automatique d'un véhicule, en particulier d'un deux-roues, dans lequel il est fait en sorte que le rapport de transmission du changement de vitesse (150) du véhicule soit automatiquement mis en fonctionnement dans un mode efficace pour la propulsion en fonction d'au moins un paramètre ambiant et/ou fonctionnel du véhicule, dans lequel la présence d'un signal de sécurité représentant une sécurité du véhicule vis-à-vis d'un mouvement non autorisé est détectée (200), dans lequel le changement de vitesse (150) est mis en fonctionnement dans un mode inefficace en fonction de la présence du signal de sécurité,
**caractérisé en ce que**
le mode inefficace est obtenu sous la forme d'une commande aléatoire d'un rapport de transmission du changement de vitesse (150) indépendamment des paramètres ambiants et/ou fonctionnels du véhicule.

2. Procédé selon la revendication 1, **caractérisé en ce que** la commande du changement de vitesse (150) ou la sélection du rapport de transmission est effectuée en mode inefficace en fonction des paramètres ambiants et/ou fonctionnels, dans lequel un rapport de transmission inadapté à la propulsion est sélectionné en opposition au mode efficace, et dans lequel il est en particulier fait en sorte de sélectionner un rapport de transmission produisant une faible propulsion.

3. Procédé selon la revendication 2, **caractérisé en ce que** le mode inefficace est commandé en fonction de la pente de la chaussée, en particulier lors d'un trajet en montée.

4. Procédé selon l'une des revendications précédentes, **caractérisé en ce que** le changement de vitesse (150) fonctionne en mode inefficace avec un rapport de transmission qui permet d'obtenir une usure élevée des composants reliés à l'entraînement.

5. Procédé selon l'une des revendications précédentes, **caractérisé en ce que** la commande du changement de vitesse (150) ou la sélection du rapport de transmission est de nouveau effectuée en mode inefficace à des intervalles de temps réguliers ou irréguliers.

6. Procédé selon l'une des revendications précédentes, **caractérisé en ce qu'**en tant que paramètres ambiants et/ou fonctionnels, un couple, une cadence, une accélération, une pente, une indication d'altitude, une vitesse, une vitesse de rotation, une vitesse de lacet, une puissance électrique, une puissance de moteur, une information GPS et/ou une température sont utilisés.

7. Dispositif de commande (100) destiné à un changement de vitesse automatique d'un véhicule, en particulier d'un deux-roues, comprenant
- un dispositif de commande (100) qui met en œuvre l'un des procédés selon les revendications 1 à 8 et détecte au moins un paramètre ambiant et/ou fonctionnel du véhicule, et
- un changement de vitesse (150) pouvant être commandé par le dispositif de commande (100), dans lequel le rapport de transmission du changement de vitesse (150) est automatiquement amené à passer dans un état de changement de vitesse en fonction dudit au moins un paramètre ambiant et/ou fonctionnel du véhicule, qui permet une propulsion du véhicule dans un mode efficace, dans lequel le dispositif de commande (100) fait passer le changement de vitesse (150) dans un mode inefficace en fonction de la détection d'un signal de sécurité (200) qui représente une sécurité du véhicule vis-à-vis d'un mouvement non autorisé,
**caractérisé en ce que** le dispositif de commande (100) fait passer de manière aléatoire le rapport de transmission du changement de vitesse (150) dans le mode inefficace, indépendamment des paramètres ambiants et/ou fonctionnels du véhicule.

8. Dispositif de commande (100) selon la revendication 7, **caractérisé en ce que** le dispositif de commande (100) commande le changement de vitesse (150) ou le rapport de transmission en mode inefficace en fonction des paramètres ambiants et/ou fonctionnels, dans lequel un rapport de transmission inadapté à la propulsion est sélectionné en opposition au mode efficace, et dans lequel il est en particulier fait en sorte de sélectionner un rapport de transmission produisant une faible propulsion.

9. Dispositif de commande (100) selon l'une des revendications 7 ou 8, **caractérisé en ce que** le dispositif de commande (150) commande le changement de vitesse (100) en mode inefficace à des intervalles de temps réguliers ou irréguliers, de manière à faire varier le rapport de transmission réglé.

10. Dispositif de commande (100) selon l'une des revendications 7 à 9, **caractérisé en ce que** le dispositif de commande (100) détecte, en tant que paramètres ambiants et/ou fonctionnels, une grandeur de couple, une grandeur de cadence, une grandeur d'accélération, une grandeur de pente, une indication d'altitude, une grandeur de vitesse de rotation, une grandeur de vitesse de lacet, une grandeur de puissance électrique, une grandeur de puissance de moteur, une information GPS et/ou une grandeur de température.

11. Véhicule, en particulier deux-roues à entraînement électrique, comprenant un dispositif de commande (100) destiné à un changement de vitesse automatique d'un véhicule selon l'une des revendications 7 à 9 et/ou un dispositif de commande (100) qui met en œuvre l'un des procédés selon les revendications 1 à 6, comprenant
- un dispositif de commande (100) qui détecte au moins un paramètre ambiant et/ou fonctionnel du véhicule, et
- un changement de vitesse (150) pouvant être commandé par le dispositif de commande (100), dans lequel le rapport de transmission du changement de vitesse (150) est automatiquement amené à passer dans un état de changement de vitesse en fonction dudit au moins un paramètre ambiant et/ou fonctionnel du véhicule, qui permet une propulsion du véhicule dans un mode efficace, **caractérisé en ce que** le dispositif de commande (100) commande le changement de vitesse (150) dans un mode inefficace en fonction d'un signal de sécurité qui représente une sécurité du véhicule vis-à-vis d'un mouvement non autorisé.
